## Europäisches Patentamt

## European Patent Office

## Office européen des brevets

(19)

(11) Veröffentlichungsnummer : **0 022 926**
**B1**

(12)

# EUROPÄISCHE PATENTSCHRIFT

(45) Veröffentlichungstag der Patentschrift :
20.04.83

(51) Int. Cl.³ : **F 02 F   1/34**

(21) Anmeldenummer : **80103242.6**

(22) Anmeldetag : **11.06.80**

---

(54) **Zylinderkopf einer luftgekühlten Brennkraftmaschine.**

---

(30) Priorität : **24.07.79 DE 2929885**

(43) Veröffentlichungstag der Anmeldung :
**28.01.81 Patentblatt 81/04**

(45) Bekanntmachung des Hinweises auf die Patenterteilung : **20.04.83 Patentblatt 83/16**

(84) Benannte Vertragsstaaten :
**AT FR GB IT**

(56) Entgegenhaltungen :
**DE A 1 476 435**
**DE A 1 930 148**
**DE A 1 935 663**
**DE A 2 712 959**
**DE B 1 476 381**
**DE C 1 123 157**
**DE C 1 158 759**

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Madsack, Heinz**
**Im Reutersberg 32**
**D-5063 Steinenbrück (DE)**

---

Jouve, 18, rue St-Denis, 75001 Paris, France

EP 0 022 926 B1

Zylinderkopf einer luftgekühlten Brennkraftmaschine

Die Erfindung betrifft einen Zylinderkopf einer luftgekühlten Brennkraftmaschine mit einem den Brennraum begrenzenden Zylinderkopfboden, in den ein zylindrischer Düsenkörper dichtend eingesetzt ist, und einer im wesentlichen parallel zum Zylinderkopfbodenverlaufenden Zylinderkopfdecke, die an einer Durchtrittsöffnung von dem Düsenkörper durchsetzt ist, wobei sich zwischen den beiden Zylinderkopfwandungen d. h. zwischen Zylinderkopfboden und — decke ein Kühlluftkanal befindet.

Zylinderköpfe dieser Art sind bekannt (z. B. Hersteller KHD, Motortyp FL 203 D). Die Betriebslage des Düsenkörpers ergibt sich bei Zylinderköpfen mit von einer untenliegenden Nockenwelle über Stoßstangen gesteuerten geradehängenden Ventilen und im wesentlichen auf einer Seite angeordneten Ansaug- und Abgaskanälen im allgemeinen als schräg zum Zylinderkopfboden. Der Ein- und Ausbau des Düsenkörpers erfolgt nach Entfernen des Düsenhalters durch zur Betriebslage koaxiale Bohrungen in den Zylinderkopfwandungen in Richtung der Betriebslage. Bestimmte Anbauten oder Zusatzaggregate, z. B. Ladeluftkühler oberhalb des Zylinderkopfes, können einem Ausbau des Düsenkörpers in dieser durch die Betriebslage vorgegebenen Richtung im Wege sein. Zum Überprüfen und Reinigen der Düsen wird in einer den Ausbau des Düsenkörpers erschwerenden Weise ein Entfernen dieser Baugruppen notwendig.

Der Erfindung liegt die Aufgabe zugrunde, einen Zylinderkopf einer luftgekühlten Brennkraftmaschine mit im wesentlichen parallelen Zylinderkopfwandungen und einem diese durchdringenden Düsenkörper zu schaffen, der einen Ausbau des Düsenkörpers in einer frei zugänglichen Richtung erlaubt, insbesondere auch parallel zur Zylinderachse.

Die Aufgabe wird dadurch gelöst, daß die Durchtrittsöffnung einer von einer Betriebslage in eine Montagelage des Düsenkörpers geschwenkten Durchdringung der Zylinderkopfdecke entspricht, wobei sich die Drehachse innerhalb des Durchdringungsbereiches befindet, daß der Düsenkörper in der Betriebslage dichtend an der Durchtrittsöffnung anliegt und daß im Kühlluftkanal Freiraum für eine Schwenkung des Düsenkörpers von der Betriebslage in die Montagelage vorhanden ist. Der erfindungsgemäße Zylinderkopf bietet den Vorteil, daß der Ausbau der Düse bei an sich schlechter Zugängigkeit des Düsenkörpers leicht durchgeführt werden kann. Die Schwenkung des Düsenkörpers um eine innerhalb der Durchtrittsöffnung liegende Achse beschränkt die Vergrößerung der Durchtrittsöffnung auf ein vertretbares Maß und ermöglicht ein vollständiges Anliegen des Düsenkörpers an einer Dichtfläche. Hierdurch werden die Kühlluftverluste gering gehalten, was bei der Kühlung von luftgekühlten Zylinderköpfen von Bedeutung ist.

In einer der Erfindung entsprechenden besonderen Ausführung ist die Montagelage senkrecht zur Zylinderkopfdecke. Hierdurch wird das Einführen des Düsenkörpers erleichtert und der erforderliche Freiraum im Kühlluftkanal gering gehalten.

In weiterer Ausgestaltung der Erfindung hat die Durchtrittsöffnung Hinterstiche, die in der Montagestellung ein gewisses Spiel des Düsenkörpers zustande kommen lassen. Auch dies dient der Verbesserung der Einbaumöglichkeit.

In besonders günstiger Weise sind die Hinterstiche so auszugestalten, daß nur ein in Betriebslage dichtender, elliptischer Steg in der Durchtrittsöffnung stehen bleibt. Ein solcher Steg kann ohne besonders großen Fertigungsaufwand und ohne Beeinträchtigung der Einbaumöglichkeit gut dichtend ausgestaltet werden. Evtl. zusätzlich dichtende Maßnahmen in diesem schmalen Bereich sind leichter darzustellen als in der gesamten Durchtrittsöffnung.

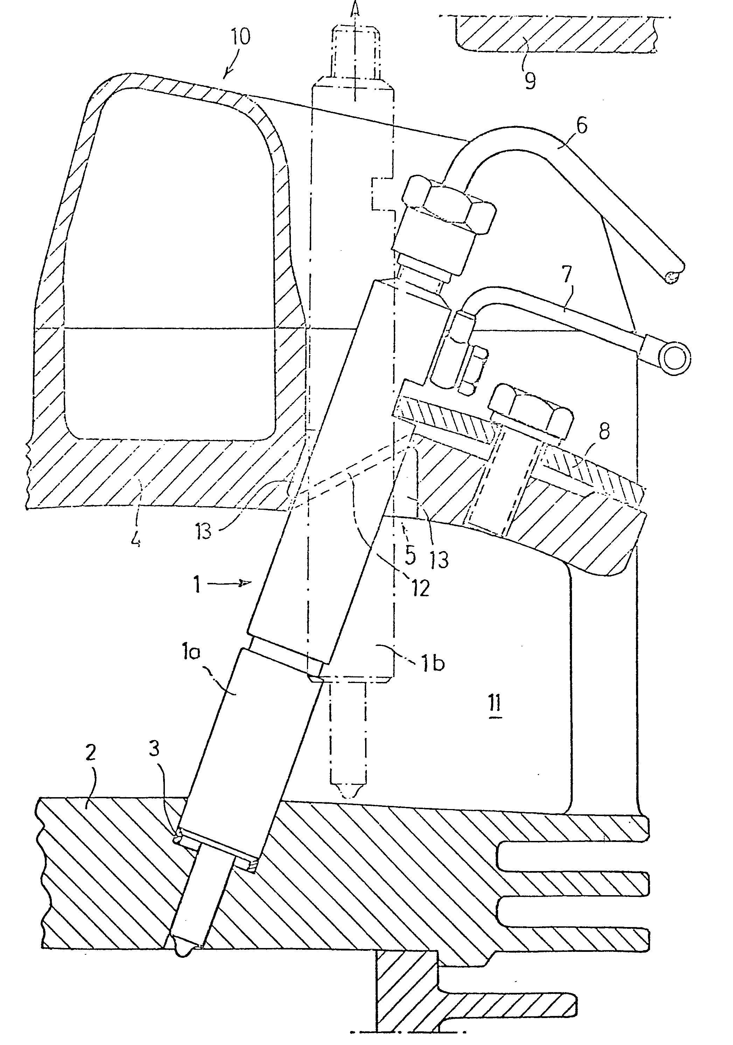

Die Zeichnung zeigt eine beispielhafte Ausführung der erfindungsgemäßen Einzelheiten eines Zylinderkopfes. Darin ist der Düsenkörper 1 in seiner Betriebslage (1a) dichtend in den Zylinderkopfboden 2 mit einem Dichtring 3 eingesetzt. Im wesentlichen parallel zum Zylinderkopfboden 2 verläuft die Zylinderkopfdecke 4, die von dem Düsenkörper 1 an der Durchtrittsöffnung 5 durchsetzt wird. Der Düsenkörper 1 ist an eine Druckleitung 6 und eine Rücklaufleitung 7 angeschlossen und wird von einem Düsenhalter 8 in der Betriebslage (1a) gehalten. Nach Entfernen dieser Bauteile kann der Düsenkörper 1 in Richtung der Betriebslage (1a) aus dem Zylinderkopfboden 2 herausgezogen und um eine Achse innerhalb der Durchtrittsöffnung 5 in die senkrecht zur Zylinderkopfdecke 4 gerichtete Montagelage (1b) geschwenkt werden. In Richtung der Montagelage (1b) kann der Düsenkörper 1 an dem den Einbau behindernden Anbauteil 9 vorbei aus dem Zylinderkopf 10 ausgebaut werden.

Der Kühlluftkanal 11 zwischen dem Zylinderkopfboden 2 und Zylinderkopfdecke 4 wird an der Durchtrittsöffnung 5 durch eine Dichtfläche 12 zur Umgebung abgedichtet. Die Durchtrittsöffnung 5 hat an den in Betriebslage anliegenden Flächen der Durchdringung Hinterstiche 13, die das Schwenken und den Ausbau des Düsenkörpers 1 erleichtern.

**Ansprüche**

1. Zylinderkopf einer luftgekühlten Brennkraftmaschine mit einem den Brennraum begrenzenden Zylinderkopfboden, in den ein zylindrischer Düsenkörper dichtend eingesetzt ist, und einer im wesentlichen parallel zum Zylinderkopfboden verlaufenden Zylinderkopfdecke, die an einer Durchtrittsöffnung von dem Düsenkörper durchsetzt wird, wobei sich zwischen Zylinderkopfboden und -decke ein Kühlluftkanal befindet, dadurch gekennzeichnet, daß die Durchtrittsöffnung (5) einer von einer Betriebslage (1a) in eine Montagelage (1b) des Düsenkörpers (1) geschwenkten Durchdringung der Zylinderkopfdecke (4) entspricht, wobei sich die Drehachse innerhalb des Durchdringungsbereiches befindet, daß der Düsenkörper (1) in der Betriebslage (1a) dichtend an der Durchtrittsöffnung (5) anliegt und daß im Kühlluftkanal (11) Freiraum für eine Schwenkung des Düsenkörpers (1) von der Betriebslage (1a) in die Montagelage (1b) vorhanden ist.

2. Zylinderkopf einer luftgekühlten Brennkraftmaschine nach Anspruch 1, dadurch gekennzeichnet, daß der Düsenkörper (1) in der Betriebslage (1a) schräg und in der Montagelage (1b) senkrecht zur Zylinderkopfdecke (4) angeordnet ist.

3. Zylinderkopf einer luftgekühlten Brennkraftmaschine nach einem der Ansprüche 1 oder 2, dadurch gekennzeichnet, daß die Durchtrittsöffnung (5) eine am Düsenkörper (1) in der Betriebslage (1a) umlaufend anliegende Dichtfläche (12) und dazu benachbarte, den Querschnitt erweiternde Hinterstiche (13) aufweist.

4. Zylinderkopf einer luftgekühlten Brennkraftmaschine nach einem der Ansprüche 1 bis 3, dadurch gekennzeichnet, daß die in der Betriebslage (1a) am Düsenkörper (1) umlaufend anliegende Dichtfläche (12) aus einem etwa gleichbleibend breiten Steg mit elliptischem Durchtritt besteht.

## Claims

1. A cylinder head for an air-cooled internal combustion engine, the cylinder head having a cylinder head bottom, which serves to terminate the combustion chamber and into which a cylindrical injection-valve body is sealingly inserted, and a cylinder head top extending substantially parallel with the cylinder head bottom and being traversed at a through-hole by the valve body, a cooling-air channel being interposed between the cylinder head bottom and the top, characterized in that the through-hole (5) is an aperture through the cylinder head top (4) permitting the valve body (1) to be swivelled from its operative position (1a) into an assembly/dismantling position (1b), in that the swivel axis is disposed in the region of the aperture, in that the valve body (1) in its operative position sealingly abuts on the through-hole (5), and in that the cooling-air channel (11) includes a free space for swivelling the valve body (1) from the operative position (1a) into the assembly/dismantling position (1b).

2. A cylinder head for an air-cooled internal combustion engine according to claim 1, characterized in that the valve body (1) in its operative position (1a) is disposed obliquely but in its assembly/dismantling position (1b) perpendicularly to the cylinder head top (4).

3. A cylinder head for an air-cooled internal combustion engine according to claim 1 or claim 2, characterized in that the through-hole (5) is provided with a sealing surface (12), which in the operative position (1a) of the valve body (1) abuts thereon all around, and adjacent to said surface with recesses (13) which enlarge the hole's cross-section.

4. A cylinder head for an air-cooled internal combustion engine according to any of the claims 1 to 3, characterized in that the sealing surface (12) which in the operative position (1a) of the valve body (1) abuts thereon all around is a web of substantially even width and having an elliptical aperture.

## Revendications

1. Tête de cylindre d'un moteur à combustion interne refroidi par l'air, avec un fond de tête de cylindre délimitant la chambre de combustion, dans lequel est inséré de façon étanche un corps de buse cylindrique, et avec un recouvrement de tête de cylindre s'étendant essentiellement de façon parallèle au fond de la tête de cylindre, et qui, en un orifice de passage est traversé par le corps de buse, un canal d'air de refroidissement se trouvant entre le fond de tête de cylindre et le recouvrement de tête de cylindre, tête de cylindre caractérisée en ce que l'orifice de passage (5) correspond à une pénétration du recouvrement (4) de la tête de cylindre changeant de direction entre une position de fonctionnement (1a) et une position de montage (1b) du corps de buse, l'axe de rotation se trouvant à l'intérieur de la zone de pénétration, cependant que le corps de buse (1), dans la position de fonctionnement (1a), s'applique de façon étanche à l'orifice de passage (5), et que dans le canal d'air de refroidissement (11) un espace libre pour le pivotement du corps de buse (1) de la position de fonctionnement (1a) dans la position de montage (1b) est ménagé.

2. Tête de cylindre d'un moteur à combustion interne refroidi à l'air selon la revendication 1, caractérisée en ce que le corps de buse (1) dans sa position de fonctionnement (1a) est disposé obliquement par rapport au recouvrement de la tête de cylindre (4) tandis qu'il est disposé perpendiculairement au recouvrement de la tête de cylindre (4) dans sa position de montage (1b).

3. Tête de cylindre d'un moteur à combustion interne refroidi à l'air selon l'une quelconque des revendications 1 et 2, caractérisée en ce que l'orifice de passage (5) comporte une surface d'étanchement (12) s'appliquant tout autour du corps de buse (1) dans la position de fonctionnement (1a), et au voisinage de cette surface d'étanchement l'encoche arrière (13) élargissant la section transversale.

4. Tête de cylindre d'un moteur à combustion interne refroidi à l'air selon l'une quelconque des revendications 1 à 3, caractérisée en ce que la surface d'étanchement (12) s'appliquant tout autour du corps de buse (1) dans la position de fonctionnement (1a) est constituée d'un voile de largeur constante avec un passage elliptique.